# EUROPÄISCHE PATENTSCHRIFT

(11) **EP 4 308 418 B1**
(45) Veröffentlichungstag und Bekanntmachung des Hinweises auf die Patenterteilung: **26.11.2025**
(21) Anmeldenummer: 22710544.2
(22) Anmeldetag: 01.03.2022
(51) Int. Cl.: B60R 1/00

(54) **VERFAHREN UND UMFELD-ERFASSUNGSSYSTEM ZUM ERZEUGEN EINES UMGEBUNGSBILDES EINES MEHRGLIEDRIGEN GESAMTFAHRZEUGS**
METHOD AND ENVIRONMENT-CAPTURE SYSTEM FOR PRODUCING AN ENVIRONMENTAL IMAGE OF AN ENTIRE MULTI-PART VEHICLE
PROCÉDÉ ET SYSTÈME DE CAPTURE D'ENVIRONNEMENT POUR GÉNÉRER UNE IMAGE ENVIRONNEMENTALE D'UN VÉHICULE ENTIER COMPOSÉ D'UNE PLURALITÉ DE PARTIES

(30) Priorität: 18.03.2021 DE 102021106670
(43) Veröffentlichungstag der Anmeldung: 24.01.2024
(73) Patentinhaber: ZF CV Systems Europe BV, 1170 Brüssel (BE)
(72) Erfinder: DIECKMANN, Thomas, 30982 Pattensen (DE); KLINGER, Tobias, 31832 Springe (DE); LÜLFING, Ralph-Carsten, 30826 Garbsen (DE); WERLE, Tobias, 30171 Hannover (DE)
(74) Vertreter: Schäferjohann, Volker
(86) Internationale Anmeldenummer: PCT/EP2022/055073
(87) Internationale Veröffentlichungsnummer: WO 2022/194532

(56) Entgegenhaltungen:
- US-A1- 2013 236 858
- US-A1- 2016 150 189
- US-A1- 2018 063 427

## Beschreibung

Fahrerassistenzsysteme ermöglichen oftmals Darstellungen der Fahrzeugumgebung, z. B. auf einem Bildschirm im Sichtbereich des Fahrers. Der Fahrer kann somit beim Manövrieren des Fahrzeugs, insbesondere bei einer Rückwärtsfahrt, Kurvenfahrt und z. B. auch beim Andocken an Ladebühnen und bei Ladevorgängen vom Fahrersitz aus das Fahrzeugumfeld überblicken.

Hierbei ist insbesondere eine umfassende Darstellung der Fahrzeugumgebung auf dem Bildschirm, insbesondere auch in Draufsicht, vorteilhaft. Einzelne Bereiche, wie z. B. der Bereich hinter einem Fahrzeugheck, können durch eine einzelne Kamera erfasst werden, die somit ein Einzelbild liefert. Größere Umgebungsbereiche können im Allgemeinen nur durch mehrere, am Fahrzeug an verschiedenen Stellen angebrachte Kameras erfasst werden, deren Einzelbilder nachfolgend zusammengesetzt werden. Für die Darstellung eines Rundumsichts-Aufsichtsbildes, d. h. einer umfassenden Darstellung der Fahrzeugumgebung um das Fahrzeug herum, sind somit im Allgemeinen Kameras an den vier Außenflächen vorgesehen, d.h. an der Vorderseite bzw. Front, der Heckseite oder dem Heckbereich und den beiden Seitenflächen. Da die einzelnen Kamerapositionen relativ zu dem Koordinatensystem des Fahrzeugs statisch sind, können die von den einzelnen Kameras in ihren Erfassungsbereichen erfassten Einzelbilder nachfolgend als Aufsichten, d. h. Komponenten-Aufsichten, projiziert und zu einer Rundumsicht zusammengesetzt werden.

Bei längeren Fahrzeugen bzw. Fahrzeugen mit mehreren Einzelkomponenten, die relativ zueinander gelenkig verbunden sind, treten jedoch Probleme auf. Insbesondere bei mehrgliederigen Gesamtfahrzeugen aus einem Zugfahrzeug und gezogenen, gegenüber dem Zugfahrzeug gelenkig verbundenen Komponenten treten hierbei Probleme auf.

Nachfolgend wird eine von dem Zugfahrzeug gezogene, gegenüber dem Zugfahrzeug gelenkig verbundene Komponente allgemein als Anhängefahrzeug bezeichnet; dieses kann somit insbesondere ein Sattelanhänger oder Deichselanhänger, aber auch z.B. ein Fahrschemel sein. Auch kann das Gesamtfahrzeug mehrere hintereinander gehängte Anhängefahrzeuge aufweisen.

Bei mehrgliederigen Gesamtfahrzeugen ändern sich die Knickwinkel zwischen den einzelnen Fahrzeugen im Allgemeinen dynamisch während der Fahrt. Ein Knickwinkel kann im Allgemeinen als der Winkel zwischen den Längsachsen der einzelnen Fahrzeuge definiert werden. Bei längeren Gesamtfahrzeugen können Kameras nicht nur am Zugfahrzeug, sondern auch an dem mindestens einen Anhängefahrzeug angebracht werden, um das Fahrzeugumfeld auch neben und hinter dem Anhängefahrzeug zu erfassen.

Die Ermittlung eines Umgebungsbildes des Gesamtfahrzeugs aus von den mehreren Kameras aufgenommenen Bildern ist entsprechend komplex, auch aufgrund möglicher Verdeckungen der Umgebung aus der jeweiligen Kameraperspektive.

Die JP 2012 105158 A zeigt die Darstellung einer Rundumsicht für einen Sattelzug mit dynamisch veränderlichem Knickwinkel. Hierbei wird eine Komponentendraufsicht auf das Zugfahrzeug entsprechend dem Knickwinkel zu der Draufsicht auf den Anhänger ausgerichtet. Der Komponentendraufsicht des Zugfahrzeugs wird eine höhere Priorität zugeteilt, wobei die Farbinformationen der Draufsicht überschrieben, werden, um eine weitgehend lückenlose Darstellung, d. h. eine Darstellung der Rundumsicht in aneinandergrenzenden Bildbereichen mit möglichst geringen Lücken, zu ermöglichen. Nach der Rotation einer Komponentendraufsicht können jedoch auch Regionen im dargestellten Bild entstehen, die nicht mit Bildinformationen der Kameras ausgefüllt werden, sondern monoton eingefärbt werden, sodass wiederum keine lückenlose Darstellung erfolgt.

Das Dokument US2018063427A1 offenbart ein Verfahren gemäß dem Oberbegriff des Anspruchs 1, wobei es zeigt ein Bildverarbeitungssystem für eine mobile Maschine. Das System kann eine Vielzahl von Kameras umfassen, die an der Maschine montiert und zum Erfassen von Bilddaten einer Umgebung um die Maschine herum konfiguriert sind. Das Verarbeitungsgerät kann die ausgewählte Stitching-Konfiguration verwenden, um ein Rundumbild der Umgebung der Maschine zu erzeugen.

Das Dokument US2013236858A1 zeigt ein Verfahren zur Erzeugung von Umgebungsbildern aus der Vogelperspektive zur Verwendung in einem automobilseitigen Gerät eines Sattelschleppers.

Das Dokument US2016/0150189A1 zeigt ein Bildverarbeitungssystem für eine Gelenkmaschine. Das System umfasst mehrere an der Maschine montierte Kameras zum Aufnehmen von Bildern und einen Maschinenzustandssensor zum Erfassen von Maschinenzustandsdaten der Maschine.

Der Erfindung liegt die Aufgabe zugrunde, ein Verfahren und eine Vorrichtung zur Erzeugung eines Umgebungsbildes eines mehrgliedrigen Gesamtfahrzeuges zu schaffen, die mit relativ geringem Aufwand eine sichere Darstellung der Fahrzeugumgebung unter verschiedenen Fahrbedingungen ermöglichen.

Diese Aufgabe wird durch ein Verfahren und ein Umfeld- Erfassungssystem nach den unabhängigen Ansprüchen gelöst. Die Unteransprüche beschreiben bevorzugte Weiterbildungen. Weiterhin ist ein mehrgliedriges Gesamtfahrzeug mit dem Umfeld-Erfassungssystem vorgesehen.

Erfindungsgemäß wird zunächst erkannt, dass die Bilder der Kameras am Anhängefahrzeug, insbesondere Heck-Kameras zur Erfassung eines hinteren Bereichs hinter dem Anhängefahrzeug, nicht statisch auf das z.B. durch das Zugfahrzeug definierte Koordinatensystem umgerechnet werden können.

Weiterhin wird erkannt, dass sich bei mehrgliederigen Fahrzeugen insbesondere auch die durch die sich bewegenden Teile der Fahrzeuge abgedeckten Verdeckungsbereiche ändern. Somit kann z. B. bei einer Kurvenfahrt der effektiv nutzbare Erfassungsbereich einer vorderen Seiten-Kamera durch die hintere abgeknickte Komponente teilweise verdeckt werden. Die Darstellung eines Verdeckungsbereichs z.B. durch eine andere Farbgebung wird erfindungsgemäß vorteilhafterweise als den Fahrer irritierend bewertet, da er daraufhin z. B. versuchen wird, verdeckte Bereiche über die Außenspiegel direkt zu betrachten, was somit zu gefährlichen Situationen führen kann.

Erfindungsgemäß ist an den nach außen gerichteten Flächen des Gesamtfahrzeugs, d. h. der Vorderseite und den Seitenflächen des Zugfahrzeugs, sowie der Heckseite bzw. Heckfläche und den Seitenflächen des Anhängefahrzeugs jeweils mindestens eine Kamera, insbesondere genau eine Kamera vorgesehen, wobei die Kameras Einzelbilder liefern. Hierbei werden zumindest zwischen den vorderen und hinteren Seiten-Kameras Überlappungsbereiche gebildet, die somit von beiden Kameras erfasst werden.

Das aus den Einzelbildern erstellte Gesamtbild, d. h. das Umgebungsbild um das Gesamtfahrzeug, kann insbesondere als Rundumsichts-Aufsichtsbild erstellt werden. Hierbei können die Einzelbilder zunächst als Aufsicht projiziert werden, d. h. als einzelne Komponenten-Aufsichten, die dann zu dem gesamten Rundumsichts-Aufsichtsbild zusammengesetzt werden; und alternativ hierzu können auch die zunächst von den nach außen gerichteten Kameras erstellten Einzelbilder zu dem Gesamtbild, d. h. einer Rundumsicht aus Sicht des Fahrzeuges zusammengesetzt werden, aus der dann das Rundumsichts-Aufsichtsbild projiziert wird.

In die Rundumsicht werden somit vorteilhafterweise Bilder der Heck-Kamera an der Heckseite des Zugfahrzeuges und einer Front-Kamera der Vorderseite des Anhängefahrzeugs nicht aufgenommen. Dem liegt die Überlegung zugrunde, dass die Erfassungsbereiche dieser Kameras durch das jeweils andere Fahrzeug zumindest weitgehend abgeschattet bzw. verdeckt sind, und somit aus diesen Einzelbildern nicht nur geringe zusätzliche Informationen gewonnen werden; hierbei wird vielmehr erfindungsgemäß auch erkannt, dass diese Einzelbilder sogar zu Fehlinformationen führen können, da die jeweiligen Komponenten des anderen Fahrzeugs unmittelbar vor der Kamera zu perspektivischen Projektionen führen können, gemäß denen diese Komponenten als zu groß projiziert werden, sodass ein mit diesen zusätzlichen Einzelbildern erstelltes Umgebungsbild um das Gesamtahrzeug mit zusätzlichen Einzelbildern der teilweise verdeckten inneren Flächen, als aufwändiger und tendenziell fehleranfälliger erkannt wird.

Die Erfassungsbereiche der einzelnen Kameras werden somit hinreichend groß gewählt; vorteilhafterweise erstrecken sich die Erfassungsbereiche der Seiten-Kameras in Richtung zum jeweils anderen Fahrzeug hin, d. h. der Erfassungsbereich der vorderen Seiten-Kameras am Zugfahrzeug nach hinten und entsprechend die Erfassungsbereiche der hinteren Seiten-Kameras am Anhängefahrzeug nach vorne, entlang der Seitenflächen des Gesamtfahrzeugs, d. h. ohne bzw. ohne relevanten Totraum oder verdeckten Bereich. Somit werden die Seiten-Kameras beispielsweise an der Außenseite der einzelnen Fahrzeuge angebracht. Hierbei werden die hinteren Seiten-Kameras beispielsweise am hinteren Ende der Seitenfläche, d. h. in oder an einem hinteren Eckbereich des Anhängefahrzeugs und entsprechend die vorderen Seiten-Kameras an einem vorderen Ende der Seitenfläche des Zugfahrzeugs, d. h. in oder an vorderen Eckbereichen des Zugfahrzeuges, angebracht, sodass sie in die jeweils andere Richtung die Umgebungsbereiche am Fahrzeug, und auch nach vorne noch einen relevanten Erfassungsbereich ergeben. Es sind auch andere Montagepunkte möglich, insbesondere solange sich der einsehbare Bereich der Seiten-Kameras mit dem Erfassungsbereich der Vorder- bzw. Heck-Kamera und den Seiten-Kameras der jeweils angehängten Komponente überschneidet, wodurch eine möglichst lückenlose Darstellung der Umgebung um das Fahrzeug ermöglicht wird.

Zwischen den beiden seitlichen Einzelbildern, d. h. zwischen der linken vorderen Seiten-Kamera und der linken hinteren Seiten-Kamera bzw. deren Erfassungsbereichen und somit den hierdurch erfassten Einzelbildern und entsprechend an der rechten Seite, wird hierbei ein Überlappungsbereich gewählt, der auch bei stärkeren Knickwinkel nicht verschwindet. Hierzu werden die von den Kameras erfassten Einzelbilder vorteilhafterweise zunächst derartig geschnitten, dass sie in die jeweils andere Längsrichtung einen relevanten Bereich aufweisen, sodass sich aus beiden seitlichen Einzelbildern dann der Überlappungsbereich bildet.

Vorteilhafterweise werden auch zwischen den seitlichen Einzelbildern und dem in Längsrichtung ausgebildeten Einzelbild der einzelnen Zugfahrzeuge, d. h. den vorderen seitlichen Einzelbildern und dem vorderen Einzelbild der Vorder-Kamera am Zugfahrzeug, und entsprechend den hinteren seitlichen Einzelbildern und dem hinteren Einzelbild am Heckbereich des Anhängefahrzeugs, Überlappungsbereiche ausgebildet, die dann vorzugsweise jeweils in sich statisch sind. Somit wird ein Umgebungsbild des Gesamtfahrzeugs gebildet, das umlaufend durchgängig durch Einzelbilder oder Überlappungsbereiche erfasst wird, sodass keine Toträume gebildet werden.

Gemäß einer bevorzugten Ausbildung sind die Überlappungsbereiche feste Anteile der Einzelbilder und/oder unabhängig vom Knickwinkel.

Somit können die Überlappungsbereiche aus den Einzelbildern bzw. in den Projektionen direkt ermittelt werden. Hierdurch wird auch sichergestellt, dass keine Lücken in dem Umgebungsbildauftreten.

Die Überlappungsbereiche werden insbesondere durch eine Mittelung bzw. unter Verarbeitung der Informationen beider Einzelbilder gebildet. Vorteilhafterweise wird grundsätzlich nicht einem der beiden Bilder eine Priorität eingeräumt. Die Gesamterstellung kann hierbei mit Farbinformationen dargestellt werden, wozu den Einzelbildern zunächst Farbinformationen zugeordnet werden, die dann vorteilhafterweise gemittelt werden können.

Die seitlichen Überlappungsbereiche können je nach Einsatz am Fahrzeug unterschiedlich erzeugt werden. Falls der Knickwinkel zwischen den Einzelfahrzeugen bekannt ist, z. B. bei Einsatz eines Knickwinkelsensors, oder auch bei der Ermittlung des Knickwinkels aus Fahrdynamik-Daten des Fahrzeugs, können somit unter Heranziehung des Knickwinkels direkt in den Überlappungsbereichen Bildinformationen gebildet werden. Hierbei kann vorteilhafterweise ergänzend z. B. eine Kreuzkorrelation gebildet werden, um eine Fehlerhaftigkeit einer so erzeugten Mittelung bzw. die Qualität zu ermitteln.

Falls der Knickwinkel nicht bekannt ist, können die seitlichen Einzelbilder auch miteinander verglichen werden, d. h. an jeder Seite jeweils das vordere Einzelbild und das hintere Einzelbild.. Dieser Vergleich bzw. relative Bewertung der Einzelbilder kann gemäß einer oder mehrerer Ausbildungen erfolgen:
Gemäß einer Ausbildung können z. B. markante externe Objekte in den Einzelbildern erfasst bzw. identifiziert und miteinander verglichen werden, um hierdurch äußere Bezugspunkte zu erhalten. Dies bedeutet insbesondere, dass ermittelt wird, ob in den Einzelbildern jeweils das gleiche externe Objekt erfasst wird, insbesondere mittels markanter Punkte.

Gemäß einer weiteren Ausbildung kann der zeitliche Verlauf der Einzelbilder verglichen werden, d. h. die zeitliche Abfolge von Strukturen oder Profilen in den Bildern, was auch als Tracker-Verfahren bekannt ist.

Alternativ oder ergänzend hierzu kann auch durch über den gesamten Überlappungsbereich eine Kreuzkorrelation oder eine andere Bewertung der Übereinstimmung der einzelnen Pixel erfolgen, um eine weitgehende Übereinstimmung in den gesamten Überlappungsbereich zu erzeugen, und somit durch schrittweises Verschieben der Einzelbilder ermittelt werden, in welchem Bereich der Kreuzkorrelationskoeffizient einen optimalen Wert erzeugt. Insbesondere ist der normierte Kreuzkorrelationskoeffizient ein Maß für die Übereinstimmung jeweiliger Überlappungsbereiche, d.h. insbesondere ein Wert für die Übereinstimmung kann somit für die Knickwinkelschätzung zwischen den Komponenten verwendet werden. Stimmen die Überlappungsbereiche der Komponenten-Aufsichten (z.B. nach einer Drehung der Aufsicht auf den Anhänger um den Koppelpunkt beider Komponenten) gut überein, wird angenommen, dass der Winkel dieser Drehung dem Knickwinkel entspricht Gemäß der Erfindung wird der Knickwinkel mit der Heck-Kamera durch das Erfassen der angehängten Fahrzeugkomponente und/oder des Anhängers bestimmt.

Dabei kann z.B. mit Bildverarbeitungsalgorithmen die relative Position der angehängten Fahrzeugkomponente gegenüber dem Zugfahrzeug verfolgt, oder direkt bestimmt werden. Anhand der relativen Positionen der Komponenten zueinander wird der Knickwinkel bestimmt.

Da die Heck-Kamera am Zugfahrzeug bei angehängtem Anhänger insbesondere nicht für die Rundumsicht verwendet wird, kann sie vorzugsweise im weitesten Sinne auch als Knickwinkelsensor dienen. Mit Bildverarbeitungsalgorithmen kann beispielsweise die Vorderseite oder Vorderfront des Anhängefahrzeugs selbst erfasst bzw. getrackt werden, wobei
die Position der Vorderseite oder Vorderfront des Anhängefahrzeugs direkt bestimmt werden kann, und/oder
die Position eines Patterns am Anhängefahrzeug bestimmt werden kann, und/oder
durch ein weiteres Verfahren die Schrägstellung des Anhängefahrzeugs gegenüber dem Zugfahrzeug detektiert werden kann.

Hierdurch können andere Sensoren ersetzt werden, oder der nach einem der anderen Verfahren bestimmte Knickwinkel korrigiert/präziser bestimmt werden.

Somit kann mit relativ geringem Aufwand, insbesondere auch geringem Hardwareaufwand, ein Umgebungsbild des Gesamtfahrzeugs erzeugt werden, das keine oder vernachlässigbare Toträume am Fahrzeug erzeugt. So kann z. B. je nach Profilierung der Außenflächen der Fahrzeuge gegebenenfalls eine teilweise Verdeckung der ganz nah an den Seitenflächen liegenden Bereiche vorgesehen sein; in diesen Bereichen von z. B. einigen Zentimetern neben dem Fahrzeug wird ein LKW-Fahrer jedoch im Allgemeinen keine Manövriervorgänge durchführen.

Ein Einfärben frei gelassener Totbereiche ist vorteilhafterweise nicht vorgesehen.

Bei der erfindungsgemäßen Vorrichtung sind somit die Einzelkameras und eine Steuereinrichtung vorgesehen, die die Einzelbilder aufnimmt, zurecht schneidet und zusammensetzt, wobei die Projektion in die Aufsicht vor oder nach dem Erzeugen des Umgebungsbild erfolgen kann.

Die Erfindung wird im Folgenden anhand der beiliegenden Zeichnungen an einigen Ausführungsformen näher erläutert. Es zeigen:
- Fig. 1: die Darstellung einer Sattelzugmaschine als Zugfahrzeug mit Kameras und Erfassungsbereichen der Kameras;
- Fig. 2: eine Darstellung eines Sattelzugs als Gesamtfahrzeug, mit Kameras, Erfassungsbereichen der Einzelbilder der Kameras und der Überlappungsbereiche;
- Fig. 3: eine der Figur 2 entsprechende Darstellung des Sattelzuges bei einer Kurvenfahrt;
- Fig. 4: ein Flussdiagramm eines erfindungsgemäßen Verfahrens;
- Fig. 5: ein Blockdiagramm eines erfindungsgemäßen Umfeld- Erfassungssystems

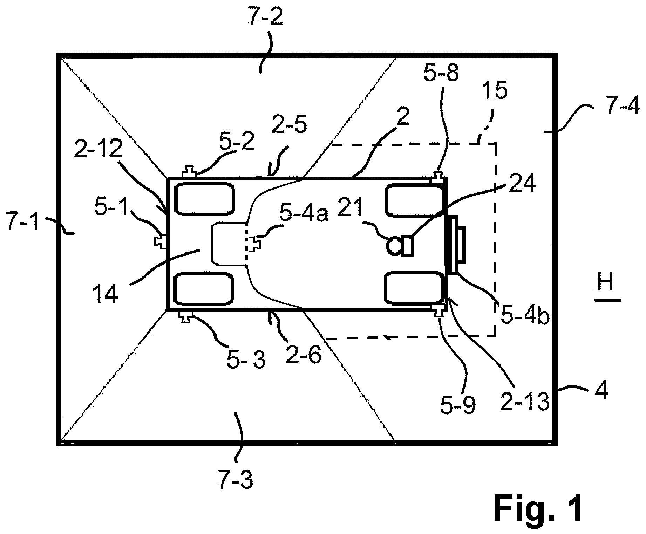

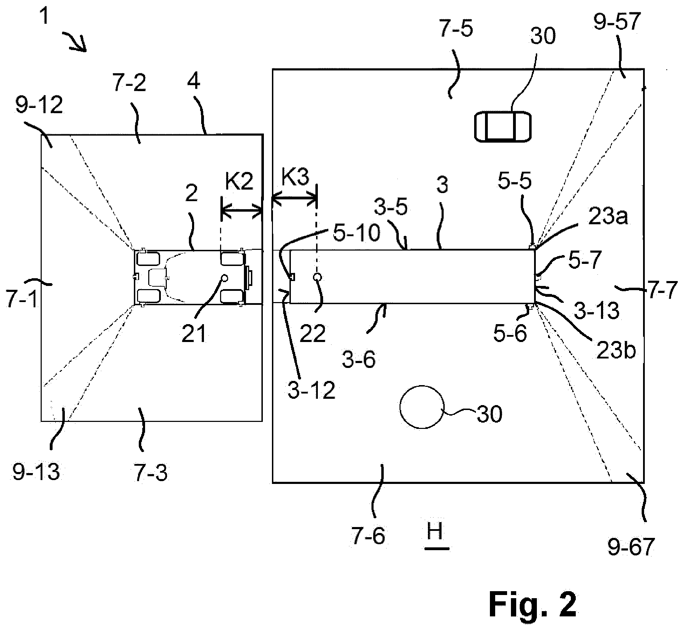

Ein mehrgliederiges Gesamtfahrzeug 1, d.h. eine Fahrzeug-Kombination, ist in dieser Ausführungsform als Sattelzug ausgebildet mit einem in Figur 1 dargestellten Zugfahrzeug 2 (Sattelzugmaschine) und einem Anhängefahrzeug 3, hier somit einem Sattelanhänger. In Figur 2 sind die beiden Fahrzeuge 2 und 3 getrennt, d. h. bei abgehängtem Anhängefahrzeug 3 dargestellt.

Das Zugfahrzeug 2 ist in Figur 1 detaillierter gezeigt; es weist eine Bilderfassungseinrichtung 6 auf, die wiederum aufweist:
eine Vorder-Kamera 5-1, die an einer Vorderseite 2-12 des Zugfahrzeugs 2 angebracht ist, insbesondere hinter der Windschutzscheibe, z. B. auch an dem Rückspiegel, aber auch an der Außenfläche, wobei die Vorder-Kamera 5-1 einen vorderen Erfassungsbereich 7-1 in einem Umfeld 4 des Gesamtfahrzeugs 1 erfasst,
zwei vordere Seiten-Kameras 5-2 und 5-3,
d.h. eine rechte vordere Seiten-Kamera 5-2 an einem rechten Seitenbereich 2-5 des Zugfahrzeugs 2 und eine linke vordere Seiten-Kamera 5-3 an einem linken Seitenbereich 2-6 des Zugfahrzeugs 2,
wobei die beiden vorderen Seiten-Kameras 5-2 und 5-3 seitliche vordere Erfassungsbereiche 7-2 und 7-3, d. h. nach rechts und links, des Zugfahrzeugs 2 erfassen,
sowie Heck-Kameras 5-4a und 5-4b, die zusammen mit den optionalen hinteren Seiten-Kameras 5-5 und 5-6 des Anhängefahrzeugs einen hinteren Erfassungsbereich 7-4 im Umfeld 4 des Zugfahrzeugs 2 erfassen. Bei dem als Sattel-Zugmaschine ausgebildeten Zugfahrzeug 2 ist die Heck-Kamera 5-4a beispielsweise an dem hinteren Bereich der Fahrerkabine 14 angebracht; allgemein kann eine Heck-Kamera 5-4b am Heck-Bereich 2-13 des Zugfahrzeugs 2 vorgesehen sein.

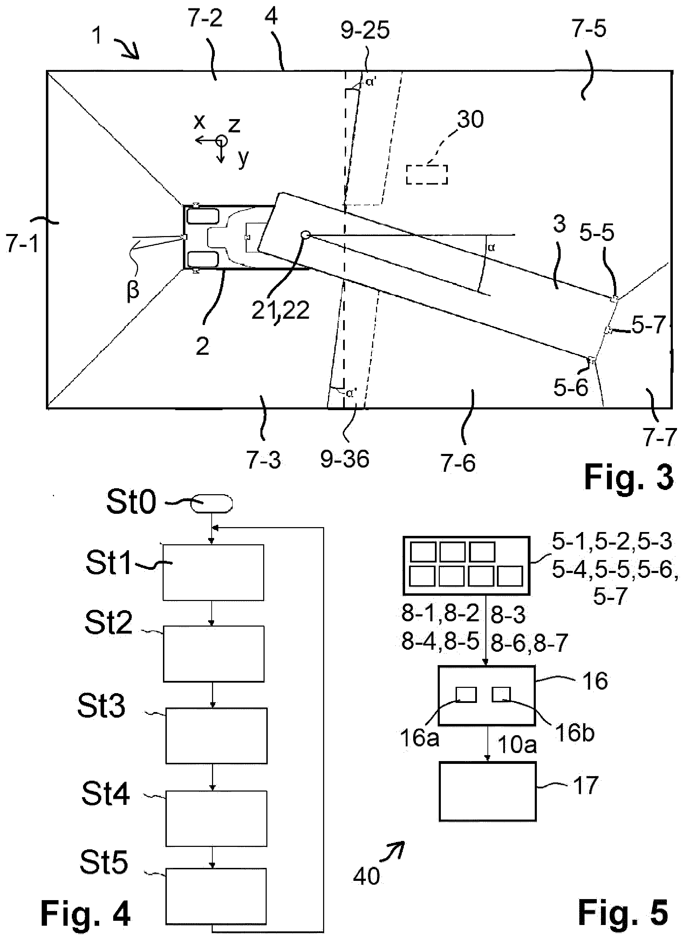

Die Kameras 5-1, 5-2, 5-3, 5-4a, 5-4b, 5-5 und 5-6 geben jeweils Einzelbilder 8-1, 8-2, 8-3, 8-4a, 8-4b , 8-5 und 8-6, an eine in Fig. 5 gezeigte, im Zugfahrzeug 2 vorgesehene Bildauswerteeinrichtung 16 aus, die bei der gezeigten Unterteilung des Umfeldes 4 direkt bzw. mit wenig Überlapp aneinander gesetzt werden können, um ein Umgebungsbild 10, hier insbesondere ein Rundumsichts-Aufsichtsbild 10a des Zugfahrzeugs 2 zu erzeugen, das das Umfeld 4 um das Zugfahrzeug 2 herum wiedergibt. Das Aneinandersetzen und Erzeugen eines zusammengesetzten Bildes wird allgemein als Stitching ("Nähen") bezeichnet. Das Rundumsichts-Aufsichtsbild 10a des Zugfahrzeugs 2 kann insbesondere in einer Anzeigeeinrichtung 17, insbesondere in der Fahrerkabine 14 des Zugfahrzeugs 2, angezeigt werden.

Die Bilderfassungseinrichtung 6, die Bildauswerteeinrichtung 16 und vorzugsweise auch die Anzeigeeinrichtung 17, bilden ein Umfeld-Erfassungssystem 40 des Gesamtfahrzeugs 1.

Vorteilhafterweise weisen die Kameras 5-1 bis 5-3 Erfassungsbereiche 7-1 bis 7-3 mit großem horizontalen Kamerawinkel auf, der in der in Fig. 1, 2, 3 gezeigten horizontalen Ebene H grundsätzlich möglichst in den Bereich von 180° geht oder auch z. B. auch ein Kamerawinkel von 190°, d. h. eine Fischaugen Ausbildung, ermöglicht. Der Kamerawinkel in vertikaler Richtung V, insbesondere nach oben, kann hingegen gezielt kleiner ausgebildet sein.

Bei der Fahrt des Zugfahrzeuges 2 alleine wird somit die Ausbildung eines Rundumsichts-Aufsichtsbild 10a (Rundumsicht, 360 °-Bild, Surroundview) des Zugfahrzeugs 2 ermöglicht, sodass der Fahrer direkt bei Vorwärtsfahrt und bei Rückwärtsfahrt, aber auch bei Kurvenfahrten Einblick in die Umgebung 4 des Zugfahrzeugs 2 erhält.

Da bei dem gezeigten Beispiel eines Zugfahrzeugs als Sattelzugmaschine 2 eine Heck-Kamera 5-4a im Bereich der Fahrerkabine 14 angeordnet ist und somit der hintere Heckbereich des Fahrzeugs 2-13 hinter und unterhalb der Heck-Kamera 5-4a liegt, wird dieser Heckbereich 2-13, der sich somit nicht auf der gleichen horizontalen Ebene des Umgebungsmodells, sondern darüber befindet, perspektivisch bedingt zu groß dargestellt. Daher wird er in den in Figur 1 gestrichelt markierten perspektivischen Projektionsbereich 15 projiziert, d. h. in dem Rundumsichts-Aufsichtsbild 10a des Zugfahrzeugs 2 verzerrt und zu groß dargestellt.

In Figur 2 sind die beiden Fahrzeuge 2 und 3 einzeln, d. h. bei abgehängtem Anhängefahrzeug 3 dargestellt. Das Anhängefahrzeug 3 weist an einer rechten Seitenfläche 3-5 eine rechte hintere Seiten-Kamera 5-5 und an einer linken Seitenfläche 3-6 eine linke hintere Seiten-Kamera 5-6, sowie eine Heck-Kamera 5-7 auf, die entsprechende Erfassungsbereiche 7-5, 7-6, 7-7 erfassen und Einzelbilder 8-5, 8-6 und 8-7 an die Bildauswerteeinrichtung 16 ausgeben. Das Anhängefahrzeug 3 ist vorzugsweise ohne eine - hier eingezeichnete - Frontkamera 5-10 ausgestattet, bzw. eine gegebenenfalls am Anhängefahrzeug 3 vorgesehene Frontkamera 5-10 wird vorteilhafterweise nicht einbezogen. Die hinteren Seiten-Kameras 5-5 und 5-6 sind beispielsweise in Eckbereichen 23a, 23b angebracht, d.h. an Übergangsbereichen der Seitenflächen 3-5 und 3-6 des Anhängefahrzeugs 3 mit der Heckfläche 3-13 des Anhängefahrzeugs 3, an der die Heck-Kamera 5-7 befestigt ist. An einer Vorderseite 3-12 des Anhängefahrzeuges 3 ist keine Kamera befestigt, d.h. es fehlt eine hintere Vorderkamera, bzw. eine hier vorgesehen Kamera wird vorzugsweise nicht in das erfindungsgemäße Verfahren einbezogen; eine derartige Kamera ist vorzugsweise erfindungsgemäß nicht erforderlich zur Ermittlung des Umgebungsbildes 10, d.h. hier des Rundumsichts-Aufsichtsbildes 10a des Gesamtfahrzeugs 1.

Zur Erzeugung des Umgebungsbildes 10, d.h. hier des Rundumsichts-Aufsichtsbildes 10a des Gesamtfahrzeugs 1 (360 ° Surroundview) werden wiederum die Einzelbilder 8-1, 8-2, 8-3 und 8-5, 8-6 und 8-7 gestitcht und projiziert, wozu
- zunächst eine Projektion, d.h. Draufsichten 18-i der Einzelbilder 8-i erzeugt und dann zu dem Rundumsichts-Aufsichtsbild 10a gesticht bzw. zusammengesetzt werden,
- oder auch zunächst die Einzelbilder 8-1, 8-2, 8-3 und 8-5, 8-6 und 8-7 gestitcht und dann zu dem Rundumsichts-Aufsichtsbild 10a projiziert werden. Dementsprechend sind in Fig. 5 eine Projektionseinrichtung 16a und eine Stitching-Einrichtung 16b als Teile der Bildauswerteeinrichtung 16 eingezeichnet, die grundsätzlich in beiden Reihenfolgen durchlaufen werden können. Beides wird hiermit, auch nachfolgend, gleichwertig miterfasst.

Hierbei werden die Erfassungsbereiche 7-i und somit die Einzelbilder 8-i derartig groß gewählt, dass sich zwischen benachbarten Einzelbildern 8-i, i = 1, 2, 3, 5, 6, 7 Überlappungsbereiche 9a, 9b, 9c, 9d, 9e und 9f bilden:
Die Ausbildung der Erfassungsbereiche 7-i ist hierbei zunächst nach links und rechts symmetrisch, sodass sich bei dem Gesamtfahrzeug 1 in Geradeausfahrt entsprechend Fig. 2 auch eine seitensymmetrische Ausbildung ergibt. Wie aus Figur 2 zu erkennen ist, sind die Kamerawinkel bzw. Erfassungswinkel 20-i der Kameras 5-i derartig groß gewählt, dass sich hinreichende Überlappungsbereiche 9 ergeben:
So ergeben sich zwischen dem vorderen Erfassungsbereich 7-1 des Zugfahrzeugs 2 und den seitlichen Erfassungsbereichen 7-2 und 7-3 des Zugfahrzeugs 2 entsprechende Überlappungsbereiche 9-12 und 9-13. Da die Erfassungsbereiche 7-1, 7-2 und 7-3 statisch bzw. fest am Zugfahrzeug 2 vorgesehen sind, sind auch ihre Überlappungsbereiche 9-12 und 9-13 fest und können somit in den Einzelbildern 8-1, 8-2 und 8-3, bzw. in den Projektionen 18-1, 18-2, 18-3 direkt ermittelt werden.

Die am Zugfahrzeug 2 prinzipiell ebenfalls gemäß Fig. 1 anbringbaren oder auch vorgesehenen Zugfahrzeug-Heck-Kameras 5-4a und/oder 5-4b werden zur Ausbildung des Umgebungsbildes 10 des Gesamtfahrzeugs 1 nicht herangezogen. Somit kann das Zugfahrzeug 2 für die Ausbildung des Gesamtfahrzeugs 1 grundsätzlich auch ohne derartige Zugfahrzeug-Heck-Kameras 5-4a und/oder 5-4b ausgebildet sein. Für Einzelfahrten des Zugfahrzeugs 2 ermöglicht sich jedoch wiederum die Ausbildung eines Rundumsichts-Aufsichtsbildes 10a des Zugfahrzeugs 2.

Bei dem Anhängefahrzeug 3 ergeben sich wiederum zwischen den Einzelbildern 8-5 und 8-6 der seitlichen Erfassungsbereiche 7-5 und 7-6 des Anhängefahrzeugs 3 und dem Einzelbild 8-7 des hinteren Erfassungsbereichs bzw. Heck-Erfassungsbereichs 7-7 Überlappungsbereiche 9-57 und 9-67, die hier wiederum zueinander statisch sind, da sie nur von Kameras 5-5, 5-6 und 5-7 an dem Anhängefahrzeug 3, aufgenommen sind.

Beim Einhängen des Anhängefahrzeugs 3 mit seiner Königszapfen-Aufnahme 22 in den Königszapfen 21 des Zugfahrzeugs 2 überlappen sich entsprechend die in Figur 2 noch getrennt gezeichneten Erfassungsbereiche 7-3 und 7-6 an der linken Seite, und Erfassungsbereiche 7-2 und 7-5 an der rechten Seite des Gesamtfahrzeugs 1 in entsprechenden Überlappungsbereichen 9-25 und 9-36. Wie aus Figur 2 ersichtlich, werden hierbei Kamerawinkel 20-2 und 20-3 sowie 20-5 und 20-6 gewählt, die in Richtung zu dem jeweils anderen Fahrzeug 2, 3 hin den gesamten Bereich des Umfeldes 4 neben den Fahrzeugen 2, 3 erfassen. Hierbei können gegebenenfalls kleine Abschattungen durch Anbauten oder Profilierungen der Seitenstrukturen auftreten. Grundsätzlich wird jedoch eine Erfassung des Umfeldes 4 ohne einen Totraum bzw. relevanten Totraum neben den Gesamtfahrzeug 1 ermöglicht, d. h. lediglich ein technisch hier nicht relevanter Totbereich von einigen Zentimetern neben den Seitenflächen, die somit jedoch auch einem Nahbereich neben dem Gesamtfahrzeug 1 entsprechen, das für die Manövrierung oder Führung des Gesamtfahrzeugs 1 durch den Fahrer nicht mehr relevant ist, da bei einem Gesamtfahrzeug 1 dieser Größe keine Führung auf einige Zentimeter neben dem Gesamtfahrzeug 1 erfolgen wird.

Bei einer Kurvenfahrt gemäß Figur 3 ergibt sich ein Knickwinkel α zwischen der Zugfahrzeug-Achse A2 des Zugfahrzeugs 2 (Längsachse des Zugfahrzeugs 2) und der Anhängefahrzeug-Achse A3 (Längsachse des Anhängefahrzeugs 3). Der Knickwinkel α kann bei Vorhandensein eines KnickwinkelSensors 24 direkt gemessen werden; weiterhin kann der Knickwinkel α auch aus Fahrdynamik-Regelsystemen allein aufgrund von fahrdynamischen Daten ermittelt werden, insbesondere durch Raddrehzahlen n der einzelnen Räder beider Fahrzeuge 2, 3, und bei entsprechenden Modellbildungen auch durch Berücksichtigung des bisherigen Fahrverlaufs und des Lenkrad-Einschlags. Derartige Verfahren zur Ermittlung eines Knickwinkels α aus Fahrdynamik-Daten sind als solche bekannt.

Wie weiter unten ergänzend beschrieben wird, kann jedoch auch nach der oder auf Grundlage der Ermittlung des Umgebungsbildes 10 des Gesamtfahrzeuges 1 der Knickwinkel α indirekt ermittelt werden.

Wenn der Knickwinkel α bereits bekannt ist, können die Einzelbilder 8-5, 8-6, 8-7 des Anhängefahrzeugs 3 entsprechend dem Knickwinkel α bezüglich der das Grund-Koordinatensystem - in Fig. 3 als x, y, z eingezeichnet - festlegenden Einzelbilder 8-1, 8-21, 8-3 des Zugfahrzeugs 2 ausgerichtet werden. Die Überlappungsbereiche 9-57 und 9-67 des Anhängefahrzeugs 3 sind statisch bezüglich des Anhängefahrzeugs 3 und können wiederum zur Ermittlung der Einzelbilder 8-5, 8-6 und 8-7 herangezogen werden. Die seitlichen Überlappungsbereiche 9-25 und 9-36 zwischen den beiden Fahrzeugen 2, 3 ändern sich hingegen dynamisch mit dem Knickwinkel α.

In Figur 3 ist die Ausbildung der Überlappungsbereiche 9-25 auf der rechten Seite des Gesamtfahrzeugs 1 und 9-36 auf der linken Seite des Gesamtfahrzeugs 1 gezeigt; hierbei können dynamisch entsprechende Überlappungsbereiche 9-25 und 9-36 definiert werden, z. B. mit einem Überlappungswinkel α' = α/2. Grundsätzlich können diese Überlappungsbereiche groß genug und links und rechts unterschiedlich gewählt werden, um ein totraumfreies Umgebungsbild 10 auszubilden.

Da sich die seitlichen Erfassungsbereiche 8-2 und 8-3 des Zugfahrzeugs 2 und die seitlichen Erfassungsbereiche 8-5 und 8-6 des Anhängefahrzeugs 3 bereits in Längsrichtung erheblich überlappen, wie aus der getrennten Darstellung bei Geradeaus-Ausrichtung der Fahrzeuge 2 und 3 aus Figur 2 zu ersehen ist, kann auch bei größeren Knickwinkeln α jeweils noch ein Überlappungsbereich 9-25 und 9-36 definiert werden. So erstrecken sich die seitlichen Erfassungsbereiche 8-2 und 8-3 des Zugfahrzeugs 2 vom Königszapfen 21 gemäß Fig. 2 nach hinten über die Strecke K2 und entsprechend am Anhängefahrzeug 3 von der Königszapfen-Aufnahme 22 nach vorne über die Strecke K3, die somit bei eingehängten Fahrzeugen sich um die Strecke K2 + K3 überlappen, so dass auch bei größeren Knickwinkeln α selbst in den seitlichen äußeren Bereichen noch ein hinreichender Überlapp besteht.

Wenn die Fahrzeuggeometrie der einzelnen Fahrzeuge 2 und 3 bekannt ist, können Überlappungsbereiche 9-i modellspezifisch anhand eines Modells definiert werden.

Falls der Knickwinkel α nicht bekannt ist, d. h. nicht durch einen Knickwinkelsensor 24 gemessen wird oder nicht aus Fahrdynamikdaten hinreichend sicher ermittelt werden kann, kann er aus den Einzelbildern 8-i der Kameras 5-i und mit Hilfe von Bildverarbeitungsalgorithmen ermittelt werden. So kann aus den Einzelbildern 8-i ein Verfolgungs-Algorithmus durchgeführt werden, bei dem somit in den Einzelbildern 8-i erfasste externe Objekte 30 in den Einzelbildern 8-i ermittelt werden, gemäß Figur 3 somit z. B. ein in den rechten Erfassungsbereichen 7-2 und 7-5 vorliegendes externes, markantes Objekt 30 zunächst in dem Einzelbild 8-2 und bei weiterer Fahrt nachfolgend in dem Einzelbild 8-5, dies kann durch Verfolgen, und/oder die Lagebestimmung der jeweils benachbarten Komponenten, z. B. auch mit einem KLT-Tracker und/oder einem modellbasierten Ansatz, erfolgen.

Hierbei können zum einen die Überlappungsbereiche 9-i bewertet werden, indem die Übereinstimmung der Überlappungsbereiche 9-i über die Berechnung eines normierten Kreuzkorrelationskoeffizienten bewertet werden, d. h. ein Maß für die Übereinstimmung der Einzelbilder 8-i in den Überlappungsbereichen 9-i, oder das sogenannte Matching markanter Punkte von Objekten 30 in den Projektionen (Draufsichten) 18-i und die Bestimmung der Lagebilder zueinander.

Somit kann die Zuordnung der Einzelbilder, z. B. 8-2 und 8-5, derartig erfolgen, dass die Überlappung bzw. der Überlappungsbereich 9-25 zwischen ihnen ermittelt wird und entsprechend auch ein Überlappungswinkel. Hieraus kann dann entsprechend mit einem Modell der Knickwinkel α ermittelt werden.

Das erfindungsgemäße Verfahren weist somit gemäß Figur 4 folgende Schritte auf:
Nach dem Start in Schritt ST0 und dem - grundsätzlich bereits an dem Fahrzeug vorgesehenen Bereitstellen der Kameras 5-i in Schritt ST1 erfolgt nachfolgend in Schritt ST2 die Aufnahme der Einzelbilder 8-i in den Erfassungsbereichen 7-i des Umfeldes 4, wobei in Schritt ST0 grundsätzlich auch erkannt oder entschieden werden kann, ob z. B. lediglich ein Rundumsichts-Aufsichtsbild 10a des Zugfahrzeugs 2 zu erzeugen ist, oder ein Anhängefahrzeug 3 vorgesehen ist, so dass ein Umgebungsbild 10 des Gesamtfahrzeugs 1 zu ermitteln ist, entsprechend ohne die Heck-Kameras 5-4a und 5-4b des Zugfahrzeugs 2.

In Schritt ST3 werden dann die Einzelbilder 8-i ausgewertet bzw. die Einzelbilder 8-i zugeschnitten,
und in Schritt ST4 die Einzelbilder 8-i zu einem Umgebungsbild 10 zusammengesetzt, was durch zunächst Projizieren zu Projektionen 18-i und nachfolgendes Stitchen oder erst Stitchen und dann Projizieren erfolgen kann, so dass sich Überlappungsbereiche 9-i zwischen den Einzelbildern 8-i ausbilden, die entsprechend berechnet werden. Bei Vorliegen des Knickwinkels α können die Überlappungsbereiche 9-i direkt aus den Einzelbildern 8-i zusammengesetzt werden; falls der Knickwinkel α nicht vorliegt, können Überlappungsbereiche 9-i durch iteratives Ausbilden von Überlagerungen der Einzelbilder 8-i und z. B. Bewerten der so gebildeten Überlappungsbereiche 9-i durch einen Kreuzkorrelationskoeffizienten ermittelt werden, oder durch ein Matching auf Grundlage während der Fahrt erfasster externer Objekte 30 oder anderer externer Bezugsgrößen.

Nachfolgend wird bei dieser Ausführungsform in Schritt ST5 das Umgebungsbild 10 als Rundumsichts-Aufsichtsbild 10a ausgebildet bzw. verarbeitet,
vorzugsweise in Farbpixel-Darstellung zur unterscheidbaren Wiedergabe unterschiedlicher Objekte 30.

Somit können in Schritt ST5 z.B. einzelne externe Objekte 30 erkannt und im Rundumsichts-Aufsichtsbild 10a entsprechend markiert werden, insbesondere durch farbige Darstellung der verschiedenen Objekte, was von dem Betrachter im Allgemeinen als angenehme Darstellung empfunden wird Dann wird das Verfahren nachfolgend zu Schritt ST1 zurückgesetzt.

Grundsätzlich kann bereits in Schritt ST4 die Rundumsicht als Draufsicht erstellt werden, so dass z.B. die Umwandlung in Schritt ST5 entfällt,
oder in Schritt ST5 erfolgt dann lediglich die Darstellung der erfassten externen Objekte in z.B. farbiger Wiedergabe

### Bezugszeichenliste (Teil der Beschreibung)

- 1: mehrgliedriges Gesamtfahrzeug, z. B. Sattelzug
- 2: Zugfahrzeug, z. B. Zugmaschine des Sattelzugs 1
- 3: Anhängefahrzeug, z. B. Sattelanhänger

- 2-5: rechter Seitenbereich des Zugfahrzeugs 2
- 2-6: linker Seitenbereich des Zugfahrzeugs 2
- 2-12: Vorderseite des Zugfahrzeugs 2
- 2-13: Heckbereich des Zugfahrzeugs 2

- 3-5: rechte Seitenfläche des Anhängefahrzeugs 3
- 3-6: linke Seitenfläche des Anhängefahrzeugs 3
- 3-12: Vorderseite des Anhängefahrzeugs 3
- 3-13: Heckbereich des Anhängefahrzeugs 3

- 4: Umfeld

- 5-i, i = 1-10: Kameras:
- 5-1: Vorder-Kamera des Zugfahrzeugs 2
- 5-2: rechte vordere Seiten-Kamera des Zugfahrzeugs 2
- 5-3: linke vordere Seiten-Kamera des Zugfahrzeugs 2
- 5-8: rechte hintere Seiten-Kamera des Zugfahrzeugs 2
- 5-9: linke hintere Seiten-Kamera des Zugfahrzeugs 2
- 5-10: optional vorgesehene Front-Kamera des Anhängefahrzeugs 3
- 5-4a und 5-4b: Heck-Kameras des Zugfahrzeugs 2:
- 5-4a: vordere Heck-Kamera des Zugfahrzeugs 2
- 5-4b: hintere Heck-Kamera des Zugfahrzeugs 2

- 5-5: rechte hintere Seiten-Kamera des Anhängefahrzeugs 3
- 5-6: linke hintere Seiten-Kamera des Anhängefahrzeugs 3
- 5-7: Heck-Kamera des Anhängefahrzeugs 3

- 6: Bilderfassungseinrichtung
- 7-i, i = 1-7: Erfassungsbereiche der Kameras 5-i
- 7-1: vorderer Erfassungsbereich
- 7-2 und 7-5: Erfassungsbereiche an der rechten Seite des Gesamtfahrzeugs 1

- 7-3 und 7-6: Erfassungsbereiche an der linken Seite des Gesamtfahrzeugs 1

- 7-4: hinterer Erfassungsbereich
- 7-7: Heck-Erfassungsbereich

- 8-i, i = 1-9: Einzelbilder der Kameras 5-i
- 8-1: vorderes Einzelbild
- 8-2, 8-3: vordere seitliche Einzelbilder
- 8-4a, 8-4b: Einzelbilder der Heck-Kameras 5-4a, 5-4b,
- 8-5, 8-6: seitliche Einzelbilder des Anhänge-Fahrzeugs 3
- 8-7: hinteres Einzelbild des Anhänge-Fahrzeugs 3
- 8-8 und 8-9: Einzelbilder der Kameras 5-8 und 5-9

- 9-12, 9-13, 9--25, 9-36, 9-57, 9-67: Überlappungsbereiche der Einzelbilder

- 10: Umgebungsbild des Gesamtfahrzeugs 1
- 10a: Rundumsichts-Aufsichtsbild, insbesondere mit Farbdaten
- 15: perspektivischer Projektionsbereich des Heckbereichs 2-13 des Zugfahrzeugs 2

- 16: Bildauswerteeinrichtung
- 16a: Projektionseinrichtung
- 16b: Stitching-Einrichtung
- 17: Anzeigeeinrichtung, z.B. Display

- 18-i: Projektionen, z.B. Draufsichten, der Einzelbilder 8-i
- 20-i, i = 1-9: Kamerawinkel, z.B. Erfassungswinkel, der Kameras 5-i

- 21: Königszapfen
- 22: Königszapfen-Aufnahme
- 23a, 23b: hintere Eckbereiche des Anhängefahrzeugs 3
- 24: Knickwinkelsensor
- 30: externe Objekte
- 40: Umfeld-Erfassungssystem

- α: Knickwinkel
- β: Lenkwinkel
- K2, K3: Strecken in Fig. 2
- xyz: Grund-Koordinatensystem des Zugfahrzeugs 2

## Patentansprüche

1. Verfahren zum Erzeugen eines Umgebungsbildes (10) eines mehrgliedrigen Gesamtfahrzeugs (1), das ein Zugfahrzeug (2) und mindestens ein Anhängefahrzeug (3) aufweist,
mit mindestens folgenden Schritten:
- Bereitstellen einer Bilderfassungseinrichtung (6) mit einer Vorder-Kamera (5-1) an einer Vorderseite (2-12) des Zugfahrzeugs (2) zum Erfassen eines vorderen Erfassungsbereichs (7-1) vor dem Zugfahrzeug (2) und Ausgabe eines vorderen Einzelbildes (8-1), vorderen Seiten-Kameras (5-2, 5-3) an dem Zugfahrzeug (2) zum Erfassen vorderer seitlicher Erfassungsbereiche (7-2, 7-3) und Ausgabe vorderer seitlicher Einzelbilder (8-2, 8-3), und einer nach hinten gerichteten vorderen Heck-Kamera (5-4a, 5-4b) an einem Heckbereich (2-13) des Zugfahrzeuges (2),
hinteren Seiten-Kameras (5-5, 5-6) an dem Anhängefahrzeug (3) zum Erfassen hinterer seitlicher Erfassungsbereiche (7-5, 7-6) und Ausgabe hinterer seitlicher Einzelbilder (8-5, 8-6),
einer Heck-Kamera (5-7) an einem Heckbereich (3-13) des Anhängefahrzeugs (3) zum Erfassen eines hinteren Erfassungsbereichs (7-7) hinter dem Anhängefahrzeug (3) und Ausgabe eines hinteren Einzelbildes (8-7) (ST1),
- Aufnahme der Einzelbilder (8-i, i = 1, 2, 3, 5,6,7) durch die Kameras (5-i, i = 1,2,3,5,6,7) (ST2),
- Auswerten und/oder Zuschneiden der Einzelbilder (8-i) derartig, dass zumindest zwischen den vorderen seitlichen Einzelbildern (8-2, 8-3) und den hinteren seitlichen Einzelbildern (8-5, 8-6) jeweils Überlappungsbereiche (9-25, 9-36) ausgebildet sind (ST3),
- Zusammensetzen der Einzelbilder (8-i) zu dem Umgebungsbild (10), das ein Umfeld (4) um das Gesamtfahrzeug (1) darstellt, unter Berücksichtigung eines Knickwinkels (α), **dadurch gekennzeichnet, dass** der Knickwinkel (α) mittels der am Heckbereich (2-13) des Zugfahrzeugs (2) vorgesehenen vorderen Heck-Kamera (5-4a, 5-4b) ermittelt wird, mittels Erfassen einer Vorderseite (3-12) des Anhängefahrzeugs (3) und Ermitteln des Knickwinkels (α) des Anhängefahrzeugs (3) gegenüber dem Zugfahrzeug (2), unter
- Bestimmen der relativen Position (p_3-12) der Vorderseite (3-12) des Anhängefahrzeugs (3) und/oder eines Musters am Anhängefahrzeug (3) gegenüber dem Zugfahrzeug (2).

2. Verfahren nach Anspruch 1, **dadurch gekennzeichnet, dass**
das Umgebungsbild (10) des Gesamtfahrzeugs (1) als Rundumsichts-Aufsichtsbild (10a) zusammengesetzt wird oder
nach Zusammensetzen der Einzelbilder (8-i) zu dem Umgebungsbild (10) des Gesamtfahrzeugs (1) nachfolgend aus dem Umgebungsbild (10) ein Rundumsichts-Aufsichtsbild (10a) als Draufsicht auf das FahrzeugUmfeld (4) um das Gesamtfahrzeug (1) herum ausgebildet wird (ST5).

3. Verfahren nach einem der vorherigen Ansprüche, **dadurch gekennzeichnet, dass** das Umgebungsbild (10) des Gesamtfahrzeugs (1) geschlossen umlaufend um das Gesamtfahrzeug (1) verläuft und/oder das Umfeld (4) geschlossen umlaufend um das Gesamtfahrzeug (1) dargestellt ist, vorzugsweise ohne Darstellung von Verdeckungsbereichen.

4. Verfahren nach einem der vorherigen Ansprüche, **dadurch gekennzeichnet, dass** Überlappungsbereiche (9-12, 9-13, 9-67, 9-57) gebildet werden zwischen:
- dem vorderen Einzelbild (8-1) und den beiden vorderen seitlichen Einzelbildern (8-2, 8-3) des Zugfahrzeugs (2), und/oder zwischen dem hinteren Einzelbild (8-7) und den hinteren seitlichen Einzelbildern (8-5, 8-6).

5. Verfahren nach einem der vorherigen Ansprüche, **dadurch gekennzeichnet, dass** die Überlappungsbereiche (9-12, 9-13, 9-67, 9-57) feste oder statische Anteile der Einzelbilder (8-i) und/oder unabhängig vom Knickwinkel (α) sind.

6. Verfahren nach einem der vorherigen Ansprüche, **dadurch gekennzeichnet, dass** die vorderen Seiten-Kameras (5-2, 5-3) in oder am Zugfahrzeug (2) derartig positioniert sind, dass ihre seitlichen vorderen Erfassungsbereiche (7-2, 7-3) sich jeweils nach vorne über das Zugfahrzeug (2) hinaus und nach hinten über einen Heckbereich (2-13) des Zugfahrzeugs (2) hinaus nach hinten erstrecken, und
die hinteren Seiten-Kameras (5-5, 5-6) in oder am Anhängefahrzeug (3) derartig positioniert sind, dass ihre hinteren seitlichen Erfassungsbereiche (7-5, 7-6) sich nach hinten über einen hinteren Heckbereich (3-13) des Anhängefahrzeugs (3) hinaus und nach vorne über eine Vorderfläche des Anhängefahrzeugs (3) hinaus erstrecken.

7. Verfahren nach einem der vorherigen Ansprüche, **dadurch gekennzeichnet, dass** sich die vorderen seitlichen Erfassungsbereiche (7-2, 7-3) nach hinten entlang eines Seitenbereichs (2.5, 2.6) des Zugfahrzeugs (2) oder ohne seitlichen Totraum am Anhängefahrzeug (3) erstrecken, und
die hinteren seitlichen Erfassungsbereiche (7-5, 7-6) sich nach vorne entlang eines Seitenbereichs (3.5, 3.6) des Anhängefahrzeugs (3) und/oder ohne Totraum am Zugfahrzeug (2) erstrecken,
zur Ausbildung seitlicher Überlappungsbereiche (9-25, 9-36), die ohne Totraum an Seitenflächen des Zugfahrzeugs (2) und des Anhängefahrzeugs (3) beginnen.

8. Verfahren nach einem der vorherigen Ansprüche, **dadurch gekennzeichnet, dass** die seitlichen Überlappungsbereiche (9-25, 9-36) aus den vorderen seitlichen Einzelbildern (8-2, 8-3) und den hinteren seitlichen Einzelbildern (8-5, 8-6) in Abhängigkeit des Knickwinkels (α) ermittelt werden,
wobei der Knickwinkel (α) ermittelt wird:
- von einem Knickwinkel-Sensor (24), und/oder
- aus Fahrdynamikdaten (n, ω, q, β),
z. B. einem oder mehreren der folgenden Fahrdynamikdaten:
Raddrehzahlen (n) des Zugfahrzeugs (2) und des Anhängefahrzeugs (3), einer gemessenen Gierrate (ω), einer gemessenen Querbeschleunigung (q) und/oder einem ermittelten Lenkwinkel (β),
insbesondere unter Ermittlung des zeitlichen Verlaufs der ermittelten Größen.

9. Verfahren nach einem der Ansprüche 1 bis 7, **dadurch gekennzeichnet, dass** aus den seitlichen vorderen Einzelbildern (8-2, 8-3) und den seitlichen hinteren Einzelbildern (8-5, 8-6) die seitlichen Überlappungsbereiche (9-25, 9-36) ohne Kenntnis des Knickwinkels (α) ermittelt werden, und nachfolgend aus den ermittelten Überlappungsbereichen (9-25, 9-36) der Knickwinkel (α) zwischen dem Zugfahrzeug (2) und dem Anhängefahrzeug (3) ermittelt wird.

10. Verfahren nach einem der vorherigen Ansprüche, **dadurch gekennzeichnet, dass** die Überlappungsbereiche (9-25, 9-36) ermittelt werden in Abhängigkeit einer Übereinstimmung benachbarter linker Einzelbilder (8-2, 8-5) oder rechter Einzelbilder (8-3, 8-6), insbesondere mittels Bildverarbeitungsalgorithmen, beispielsweise mittels Kreuzkorrelationskoeffizienten (KK) und/oder Identifizieren oder Auffinden externer Objekte (30) in den Einzelbildern (8-i).

11. Verfahren nach einem der vorherigen Ansprüche, **dadurch gekennzeichnet, dass** die seitlichen Überlappungsbereiche (9-25, 9-36) durch Vergleichen zeitlicher Folgen von seitlichen Einzelbildern (8-2, 8-5; 8-3, 8-6) ermittelt werden.

12. Verfahren nach einem der vorherigen Ansprüche, **dadurch gekennzeichnet, dass** die Übereinstimmung der seitlichen Einzelbilder (8-2, 8-5; 8-3, 8-6) aus den Einzelbildern (8-2, 8-5; 8-3, 8-6) und/oder aus den Einzelbildern (8-2, 8-5; 8-3, 8-6) der ermittelten Draufsichten (18-2, 18-5; 18-3, 18-6) ermittelt werden.

13. Verfahren nach einem der vorherigen Ansprüche, **dadurch gekennzeichnet, dass** zunächst aus den Einzelbildern (8-i) Draufsichten (18-i) erzeugt werden und nachfolgend aus den Draufsichten (18-i) das Umgebungsbild (10) des Gesamtfahrzeugs (1) ermittelt wird.

14. Verfahren nach einem der vorherigen Ansprüche, **dadurch gekennzeichnet, dass** das Umgebungsbild (10) des Gesamtfahrzeugs (1) lückenlos und/oder ohne Totraum und/oder durchgängig das Umfeld (4) um das Gesamtfahrzeug (1) herum darstellt.

15. Verfahren nach einem der vorherigen Ansprüche, **dadurch gekennzeichnet, dass** die Einzelbilder (8-i) und/oder das Umgebungsbild (10) des Gesamtfahrzeugs (1) und/oder das Rundumsichts-Aufsichtsbild (10a) mit Farbdaten, insbesondere zur Darstellung erfasster externer Objekte (30), erzeugt werden.

16. Verfahren nach einem der vorherigen Ansprüche, **dadurch gekennzeichnet, dass** das Umgebungsbild (10) des Gesamtfahrzeugs (1) ohne Einbeziehung einer nach hinten gerichteten Heck-Kamera (5-4a, 5-4b) des Zugfahrzeugs (2) und/oder ohne Einbeziehung einer an der Vorderseite (3-12) des Anhängefahrzeugs (3) vorgesehenen Front-Kamera (5-10) des Anhängefahrzeugs (3) ausgebildet wird.

17. Verfahren nach einem der vorherigen Ansprüche, **dadurch gekennzeichnet, dass** die seitlichen Einzelbilder (8-2, 8-5; 8-3, 8-6) in Abhängigkeit des Knickwinkels (α) und/oder einer ermittelten Übereinstimmung zurechtgeschnitten werden, zur Ausbildung geeigneter Überlappungsbereiche (9-25, 9-36).

18. Umfeld-Erfassungssystem (40) zur Durchführung eines Verfahrens nach einem der vorherigen Ansprüche, wobei das Umfeld-Erfassungssystem (40) aufweist:
eine Vorder-Kamera (5-1) an einer Vorderseite (2-12) des Zugfahrzeugs (2),
eine linke vordere Seiten-Kamera (5-3) an einem linken Seitenbereich (2-6) des Zugfahrzeugs (2),
eine rechte vordere Seiten-Kamera (5-2) an einem rechten Seitenbereich (2-5) des Zugfahrzeugs (2),
eine Heck-Kamera (5-4a, 5-4b) an einem Heckbereich (2-13) des Zugfahrzeuges (2),
eine Heck-Kamera (5-7) des Anhängefahrzeuges (3), an einem Heckbereich (3-13) des Anhängefahrzeugs (3),
eine linke hintere Seiten-Kamera (5-6) des Anhängefahrzeugs (3), an einem linken Seitenbereich (3-6) des Anhängefahrzeugs (3) und eine rechte hintere Seiten-Kamera (5-5) des Anhängefahrzeugs (3), an einem rechten Seitenbereich (3-5) des Anhängefahrzeugs (3),
wobei die Kameras (5-i) zur Erfassung von Erfassungsbereichen (7-i) des Umfeldes (4) um das Gesamtfahrzeug (1) herum und zur Erzeugung von Einzelbildern (8-i) und der Ausbildung zumindest seitlicher Überlappungsbereiche (9-25, 9-36) vorgesehen sind,
eine Bildauswerteeinrichtung (16) zur Aufnahme der Einzelbilder (8-i), zum Zurechtschneiden der Einzelbilder (8-i) und zur Erzeugung des Umgebungsbildes (10) des Gesamtfahrzeugs (1), das das Umfeld (4) wiedergibt, **dadurch gekennzeichnet, dass** die Bildauswerteeinrichtung das ausgelegt ist zum Zurechtschneiden der Einzelbilder (8-i) unter Berücksichtigung eines Knickwinkels (α) und zum Bestimmen des Knickwinkels (α) zwischen Zugfahrzeug (2) und Anhängefahrzeug (3) mittels Bildauswertung der Bilder der vorderen Heck-Kamera (5-4a, 5-4b) durch Erfassen einer Vorderseite (3-12) des Anhängefahrzeugs (3) und Bestimmen der relativen Position (p_3-12) der Vorderseite (3-12) des Anhängefahrzeugs (3) und/oder eines Musters am Anhängefahrzeug (3) gegenüber dem Zugfahrzeug (2).

19. Umfeld-Erfassungssystem (40) nach Anspruch 18, **dadurch gekennzeichnet, dass** sie weiterhin einen Knickwinkelsensor (24) zur Ermittlung des Knickwinkels (α) aufweist.

20. Mehrgliedriges Gesamtfahrzeug (1), das ein Zugfahrzeug (2), ein Anhängefahrzeug (3) und ein Umfeld-Erfassungssystem (40) nach Anspruch 18 oder 19 aufweist.

## Claims

1. Method for generating an environment image (10) of a multi-unit complete vehicle (1) comprising a towing vehicle (2) and at least one trailer vehicle (3),
which method comprises at least the following steps:
- providing an image capture device (6) comprising
a front camera (5-1) on a front side (2-12) of the towing vehicle (2) for detecting a front detection region (7-1) in front of the towing vehicle (2) and outputting a front individual image (8-1),
front lateral cameras (5-2, 5-3) on the towing vehicle (2) for detecting front lateral detection regions (7-2, 7-3) and outputting front lateral individual images (8-2, 8-3), and a rear-facing front tail camera (5-4a, 5-4b) in a tail region (2-13) of the towing vehicle (2),
rear lateral cameras (5-5, 5-6) on the trailer vehicle (3) for detecting rear lateral detection regions (7-5, 7-6) and outputting rear lateral individual images (8-5, 8-6),
a tail camera (5-7) in a tail region (3-13) of the trailer vehicle (3) for detecting a rear detection region (7-7) behind the trailer vehicle (3) and outputting a rear individual image (8-7) (ST1),
- recording the individual images (8-i, i = 1,2, 3, 5,6,7) by means of the cameras (5-i, i = 1,2,3,5,6,7) (ST2),
- evaluating and/or cropping the individual images (8-i) in such a way that overlap regions (9-25, 9-36) are formed at least between the front lateral individual images (8-2, 8-3) and the rear lateral individual images (8-5, 8-6) respectively (ST3),
- combining the individual images (8-i) to form the environment image (10) depicting an environment (4) around the complete vehicle (1), taking into account an articulation angle (α),**characterized in that** the articulation angle (α) is determined by means of the front tail camera (5-4a, 5-4b) provided in the tail region (2-13) of the towing vehicle (2), by detecting a front side (3-12) of the trailer vehicle (3) and determining the articulation angle (α) of the trailer vehicle (3) relative to the towing vehicle (2),
thereby
- determining the relative position (p_3-12) of the front side (3-12) of the trailer vehicle (3) and/or of a pattern on the trailer vehicle (3) relative to the towing vehicle (2).

2. Method according to claim 1, **characterized in that**
the environment image (10) of the complete vehicle (1) is composed as a panoramic view image (10a) or
after composing the individual images (8-i) to form the environment image (10) of the complete vehicle (1), a panoramic view image (10a) is subsequently formed from the environment image (10) as a plan view of the vehicle environment (4) around the complete vehicle (1) (ST5).

3. Method according to either of the preceding claims,
**characterized in that** the environment image (10) of the complete vehicle (1) runs in a closed circumferential manner around the complete vehicle (1) and/or the environment (4) is depicted in a closed circumferential manner around the complete vehicle (1), preferably without depicting any occlusion regions.

4. Method according to any of the preceding claims, **characterized in that** overlap regions (9-12, 9-13, 9-67, 9-57) are formed between:
- the front individual image (8-1) and the two front lateral individual images (8-2, 8-3) of the towing vehicle (2), and/or
between the rear individual image (8-7) and the rear lateral individual images (8-5, 8-6).

5. Method according to any of the preceding claims, **characterized in that** the overlap regions (9-12, 9-13, 9-67, 9-57) are fixed or static parts of the individual images (8-i) and/or independent of the articulation angle (α).

6. Method according to any of the preceding claims, **characterized in that** the front lateral cameras (5-2, 5-3) are positioned in or on the towing vehicle (2) such that the lateral front detection regions (7-2, 7-3) of said cameras each extend forward beyond the towing vehicle (2) and rearward beyond a tail region (2-13) of the towing vehicle (2), and
the rear lateral cameras (5-5, 5-6) are positioned in or on the trailer vehicle (3) such that the rear lateral detection regions (7-5, 7-6) of said cameras extend rearward beyond a rear tail region (3-13) of the trailer vehicle (3) and forward beyond a front surface of the trailer vehicle (3).

7. Method according to any of the preceding claims, **characterized in that** the front lateral detection regions (7-2, 7-3) extend rearward along a lateral region (2.5, 2.6) of the towing vehicle (2) or without lateral dead space on the trailer vehicle (3), and
the rear lateral detection regions (7-5, 7-6) extend forward along a lateral region (3.5, 3.6) of the trailer vehicle (3) and/or without dead space on the towing vehicle (2),
in order to form lateral overlap regions (9-25, 9-36) which begin without dead space on the lateral surfaces of the towing vehicle (2) and of the trailer vehicle (3).

8. Method according to any of the preceding claims, **characterized in that** the lateral overlap regions (9-25, 9-36) are determined from the front lateral individual images (8-2, 8-3) and the rear lateral individual images (8-5, 8-6) depending on the articulation angle (α),
the articulation angle (α) being determined:
- by an articulation angle sensor (24), and/or
- from driving dynamics data (n, ω, q, β),
e.g. one or more of the following pieces of driving dynamics data: wheel speeds (n) of the towing vehicle (2) and of the trailer vehicle (3), a measured yaw rate (ω), a measured lateral acceleration (q) and/or a determined steering angle (β),
in particular by determining the variation over time of the determined variables.

9. Method according to any of claims 1 to 7, **characterized in that** the lateral overlap regions (9-25, 9-36) are determined from the lateral front individual images (8-2, 8-3) and the lateral rear individual images (8-5, 8-6) without knowledge of the articulation angle (α), and subsequently the articulation angle (α) between the towing vehicle (2) and the trailer vehicle (3) is determined from the determined overlap regions (9-25, 9-36).

10. Method according to any of the preceding claims, **characterized in that** the overlap regions (9-25, 9-36) are determined depending on a match between adjacent left individual images (8-2, 8-5) or right individual images (8-3, 8-6), in particular by means of image processing algorithms, for example by means of cross-correlation coefficients (KK) and/or by means of identifying or finding external objects (30) in the individual images (8-i).

11. Method according to any of the preceding claims, **characterized in that** the lateral overlap regions (9-25, 9-36) are determined by comparing temporal sequences of lateral individual images (8-2, 8-5; 8-3, 8-6).

12. Method according to any of the preceding claims, **characterized in that** the match between the lateral individual images (8-2, 8-5; 8-3, 8-6) is determined from the individual images (8-2, 8-5; 8-3, 8-6) and/or from the individual images (8-2, 8-5; 8-3, 8-6) of the determined plan views (18-2, 18-5; 18-3, 18-6).

13. Method according to any of the preceding claims, **characterized in that** first, plan views (18-i) are generated from the individual images (8-i) and subsequently, the environment image (10) of the complete vehicle (1) is determined from the plan views (18-i).

14. Method according to any of the preceding claims, **characterized in that** the environment image (10) of the complete vehicle (1) depicts the environment (4) around the complete vehicle (1) without gaps and/or without dead space and/or continuously.

15. Method according to any of the preceding claims, **characterized in that** the individual images (8-i) and/or the environment image (10) of the complete vehicle (1) and/or the panoramic view image (10a) are generated by using color data, in particular in order to depict detected external objects (30).

16. Method according to any of the preceding claims, **characterized in that** the environment image (10) of the complete vehicle (1) is formed without including a rear-facing tail camera (5-4a, 5-4b) of the towing vehicle (2) and/or without including a front camera (5-10) of the trailer vehicle (3) provided on the front side (3-12) of the trailer vehicle (3).

17. Method according to any of the preceding claims, **characterized in that** the lateral individual images (8-2, 8-5; 8-3, 8-6) are cropped depending on the articulation angle (α) and/or a determined match in order to form suitable overlap regions (9-25, 9-36).

18. Environment detection system (40) for executing a method according to any of the preceding claims, the environment detection system (40) comprising:
a front camera (5-1) on a front side (2-12) of the towing vehicle (2),
a left front lateral camera (5-3) in a left lateral region (2-6) of the towing vehicle (2),
a right front lateral camera (5-2) in a right lateral region (2-5) of the towing vehicle (2),
a tail camera (5-4a, 5-4b) in a tail region (2-13) of the towing vehicle (2),
a tail camera (5-7) of the trailer vehicle (3) in a tail region (3-13) of the trailer vehicle (3),
a left rear lateral camera (5-6) of the trailer vehicle (3), in a left lateral region (3-6) of the trailer vehicle (3) and a right rear lateral camera (5-5) of the trailer vehicle (3), in a right lateral region (3-5) of the trailer vehicle (3),
the cameras (5-i) being provided in order to detect detection regions (7-i) of the environment (4) around the complete vehicle (1) and generate individual images (8-i) and form at least lateral overlap regions (9-25, 9-36),
an image evaluation device (16) for recording the individual images (8-i), for cropping the individual images (8-i) and for generating the environment image (10) of the complete vehicle (1), which image reproduces the environment (4),
**characterized in that** the image evaluation device is designed to crop the individual images (8-i), taking into account an articulation angle (α), and to determine the articulation angle (α) between the towing vehicle (2) and the trailer vehicle (3) by means of image evaluation of the images from the front tail camera (5-4a, 5-4b) by detecting a front side (3-12) of the trailer vehicle (3) and determining the relative position (p_3-12) of the front side (3-12) of the trailer vehicle (3) and/or of a pattern on the trailer vehicle (3) relative to the towing vehicle (2).

19. Environment detection system (40) according to claim 18,
**characterized in that** the system further comprises an articulation angle sensor (24) for determining the articulation angle (α).

20. Multi-unit complete vehicle (1) comprising a towing vehicle (2), a trailer vehicle (3) and an environment detection system (40) according to claim 18 or claim 19.

## Revendications

1. Procédé pour la génération d'une image d'environnement (10) d'un véhicule complet (1) à plusieurs éléments présentant un véhicule tracteur (2) et au moins un véhicule tracté (3),
comportant au moins les étapes suivantes :
- fourniture d'un dispositif de capture d'image (6) comportant
une caméra avant (5-1) sur un côté avant (2-12) du véhicule tracteur (2) pour la capture d'une zone de capture avant (7-1) à l'avant du véhicule tracteur (2) et l'émission d'une image individuelle avant (8-1),
des caméras latérales avant (5-2, 5-3) sur le véhicule tracteur (2) pour la capture de zones de capture latérales avant (7-2, 7-3) et l'émission d'images individuelles latérales avant (8-2, 8-3), et une caméra arrière avant (5-4a, 5-4b) orientée vers l'arrière sur une zone arrière (2-13) du véhicule tracteur (2),
des caméras latérales arrière (5-5, 5-6) sur le véhicule tracté (3) pour la capture de zones de capture latérales arrière (7-5, 7-6) et l'émission d'images individuelles latérales arrière (8-5, 8-6),
une caméra arrière (5-7) sur une zone arrière (3-13) du véhicule tracté (3) pour la capture d'une zone de capture arrière (7-7) derrière le véhicule tracté (3) et l'émission d'une image individuelle arrière (8-7) (ST1),
- réception des images individuelles (8-i, i = 1, 2, 3, 5, 6, 7) par les caméras (5-i, i = 1, 2, 3, 5, 6, 7) (ST2),
- évaluation et/ou découpage des images individuelles (8-i) de telle sorte que des zones de chevauchement (9-25, 9-36) sont respectivement formées au moins entre les images individuelles latérales avant (8-2, 8-3) et les images individuelles latérales arrière (8-5, 8-6) (ST3),
- assemblage des images individuelles (8-i) en image d'environnement (10) représentant un entourage (4) autour du véhicule complet (1), en prenant en compte un angle d'articulation (α), **caractérisé en ce que** l'angle d'articulation (α) est déterminé au moyen de la caméra arrière avant (5-4a, 5-4b) prévue sur la zone arrière (2-13) du véhicule tracteur (2), au moyen d'une capture d'un côté avant (3-12) du véhicule tracté (3) et d'une détermination de l'angle d'articulation (α) du véhicule tracté (3) par rapport au véhicule tracteur (2), en
- déterminant la position relative (p_3-12) du côté avant (3-12) du véhicule tracté (3) et/ou un motif sur le véhicule tracté (3) par rapport au véhicule tracteur (2).

2. Procédé selon la revendication 1, **caractérisé en ce que**
l'image d'environnement (10) du véhicule complet (1) est assemblée sous forme d'image de surveillance en vue panoramique (10a), ou
après assemblage des images individuelles (8-i) en image d'environnement (10) du véhicule complet (1), une image de surveillance en vue panoramique (10a) est ensuite formée à partir de l'image d'environnement (10) en tant que vue de dessus sur l'entourage de véhicule (4) autour du véhicule complet (1) (ST5).

3. Procédé selon l'une des revendications précédentes, **caractérisé en ce que** l'image d'environnement (10) du véhicule complet (1) s'étend circonférentiellement de manière fermée autour du véhicule complet (1) et/ou l'entourage (4) est représenté circonférentiellement de manière fermée autour du véhicule complet (1), de préférence sans représentation de zones de dissimulation.

4. Procédé selon l'une des revendications précédentes, **caractérisé en ce que** des zones de chevauchement (9-12, 9-13, 9-67, 9-57) sont formées entre :
- l'image individuelle avant (8-1) et les deux images individuelles latérales avant (8-2, 8-3) du véhicule tracteur (2), et/ou
entre l'image individuelle arrière (8-7) et les images individuelles latérales arrière (8-5, 8-6).

5. Procédé selon l'une des revendications précédentes,
**caractérisé en ce que** les zones de chevauchement (9-12, 9-13, 9-67, 9-57) sont des fractions fixes ou statiques des images individuelles (8-i) et/ou sont indépendantes de l'angle d'articulation (α).

6. Procédé selon l'une des revendications précédentes, **caractérisé en ce que** les caméras latérales avant (5-2, 5-3) sont positionnées dans le véhicule tracteur (2) ou sur celui-ci de telle sorte que leurs zones de capture latérales avant (7-2, 7-3) s'étendent respectivement vers l'avant au-delà du véhicule tracteur (2) et vers l'arrière au-delà d'une zone arrière (2-13) du véhicule tracteur (2), et
les caméras latérales arrière (5-5, 5-6) sont positionnées dans le véhicule tracté (3) ou sur celui-ci de telle sorte que leurs zones de capture latérales arrière (7-5, 7-6) s'étendent vers l'arrière au-delà d'une zone arrière (3-13) du véhicule tracté (3) et vers l'avant au-delà d'une surface avant du véhicule tracté (3).

7. Procédé selon l'une des revendications précédentes,
**caractérisé en ce que** les zones de capture latérales avant (7-2, 7-3) s'étendent vers l'arrière le long d'une zone latérale (2.5, 2.6) du véhicule tracteur (2) ou sans espace mort latéral sur le véhicule tracté (3), et
les zones de capture latérales arrière (7-5, 7-6) s'étendent vers l'avant le long d'une zone latérale (3.5, 3.6) du véhicule tracté (3) et/ou sans espace mort sur le véhicule tracteur (2),
pour la formation de zones de chevauchement (9-25, 9-36) latérales qui commencent sans espace mort sur des surfaces latérales du véhicule tracteur (2) et du véhicule tracté (3).

8. Procédé selon l'une des revendications précédentes, **caractérisé en ce que** les zones de chevauchement (9-25, 9-36) latérales sont déterminées à partir des images individuelles latérales avant (8-2, 8-3) et des images individuelles latérales arrière (8-5, 8-6) en fonction de l'angle d'articulation (α),
dans lequel l'angle d'articulation (α) est déterminé :
- par un capteur d'angle d'articulation (24), et/ou
- à partir de données de dynamique de conduite (n, ω, q, β),
par exemple, une ou plusieurs des données de dynamique de conduite : vitesses de rotation de roue (n) du véhicule tracteur (2) et du véhicule tracté (3), taux de lacet mesuré (ω), accélération transversale mesurée (q) et/ou angle de braquage déterminé (β),
en particulier en déterminant l'évolution temporelle des grandeurs déterminées.

9. Procédé selon l'une des revendications 1 à 7, **caractérisé en ce que,** à partir des images individuelles latérales avant (8-2, 8-3) et des images individuelles latérales arrière (8-5, 8-6), les zones de chevauchement (9-25, 9-36) latérales sont déterminées sans connaître l'angle d'articulation (α), et ensuite, à partir des zones de chevauchement (9-25, 9-36) déterminées, l'angle d'articulation (α) est déterminé entre le véhicule tracteur (2) et le véhicule tracté (3).

10. Procédé selon l'une des revendications précédentes,
**caractérisé en ce que** les zones de chevauchement (9-25, 9-36) sont déterminées en fonction d'une concordance d'images individuelles gauches (8-2, 8-5) adjacentes ou d'images individuelles droites (8-3, 8-6) adjacentes, en particulier au moyen d'algorithmes de traitement d'images, par exemple au moyen de coefficients de corrélation croisée (KK) et/ou d'identification ou de repérage d'objets externes (30) dans les images individuelles (8-i).

11. Procédé selon l'une des revendications précédentes, **caractérisé en ce que** les zones de chevauchement (9-25, 9-36) latérales sont déterminées en comparant des séquences temporelles d'images individuelles latérales (8-2, 8-5 ; 8-3, 8-6).

12. Procédé selon l'une des revendications précédentes,
**caractérisé en ce que** la concordance des images individuelles latérales (8-2, 8-5 ; 8-3, 8-6) est déterminée à partir des images individuelles (8-2, 8-5 ; 8-3, 8-6) et/ou à partir des images individuelles (8-2, 8-5 ; 8-3, 8-6) des vues de dessus (18-2, 18-5 ; 18-3, 18-6) déterminées.

13. Procédé selon l'une des revendications précédentes,
**caractérisé en ce que** des vues de dessus (18-i) sont d'abord générées à partir des images individuelles (8-i) et l'image d'environnement (10) du véhicule complet (1) est ensuite déterminée à partir des vues de dessus (18-i).

14. Procédé selon l'une des revendications précédentes,
**caractérisé en ce que** l'image d'environnement (10) du véhicule complet (1) représente sans lacune et/ou sans espace mort et/ou de manière continue l'entourage (4) autour du véhicule complet (1).

15. Procédé selon l'une des revendications précédentes,
**caractérisé en ce que** les images individuelles (8-i) et/ou l'image d'environnement (10) du véhicule complet (1) et/ou l'image de surveillance en vue panoramique (10a) sont générées avec des données de couleur, en particulier pour la représentation d'objets externes (30) détectés.

16. Procédé selon l'une des revendications précédentes,
**caractérisé en ce que** l'image d'environnement (10) du véhicule complet (1) est formée sans inclure une caméra arrière (5-4a, 5-4b) orientée vers l'arrière du véhicule tracteur (2) et/ou sans inclure une caméra avant (5-10) du véhicule tracté (3) prévue côté avant (3-12) du véhicule tracté (3).

17. Procédé selon l'une des revendications précédentes, **caractérisé en ce que** les images individuelles latérales (8-2, 8-5 ; 8-3, 8-6) sont recadrées en fonction de l'angle d'articulation (α) et/ou d'une concordance déterminée, pour la formation de zones de chevauchement (9-25, 9-36) appropriées.

18. Système de capture d'entourage (40) pour la mise en œuvre d'un procédé selon l'une des revendications précédentes, dans lequel le système de capture d'entourage (40) présente :
une caméra avant (5-1) sur un côté avant (2-12) du véhicule tracteur (2),
une caméra latérale avant gauche (5-3) sur une zone latérale gauche (2-6) du véhicule tracteur (2),
une caméra latérale avant droite (5-2) sur une zone latérale droite (2-5) du véhicule tracteur (2),
une caméra arrière (5-4a, 5-4b) sur une zone arrière (2-13) du véhicule tracteur (2),
une caméra arrière (5-7) du véhicule tracté (3), sur une zone arrière (3-13) du véhicule tracté (3),
une caméra latérale arrière gauche (5-6) du véhicule tracté (3), sur une zone latérale gauche (3-6) du véhicule tracté (3) et une caméra latérale arrière droite (5-5) du véhicule tracté (3), sur une zone latérale droite (3-5) du véhicule tracté (3),
dans lequel les caméras (5-i) sont prévues pour la détection de zones de capture (7-i) de l'entourage (4) autour du véhicule complet (1) et pour la génération d'images individuelles (8-i) et la formation de zones de chevauchement (9-25, 9-36) au moins latérales,
un dispositif d'évaluation d'image (16) pour la réception des images individuelles (8-i), pour le recadrage des images individuelles (8-i) et pour la génération de l'image d'environnement (10) du véhicule complet (1), qui reproduit l'entourage (4), **caractérisé en ce que** le dispositif d'évaluation d'image est configuré pour recadrer les images individuelles (8-i) en prenant en compte un angle d'articulation (α) et pour déterminer l'angle d'articulation (α) entre le véhicule tracteur (2) et le véhicule tracté (3) au moyen d'une évaluation d'image des images de la caméra arrière avant (5-4a, 5-4b) en détectant un côté avant (3-12) du véhicule tracté (3) et en déterminant la position relative (p_3-12) du côté avant (3-12) du véhicule tracté (3) et/ou un motif sur le véhicule tracté (3) par rapport au véhicule tracteur (2).

19. Système de capture d'entourage (40) selon la revendication 18,
**caractérisé en ce qu'**il présente en outre un capteur d'angle d'articulation (24) pour la détermination de l'angle d'articulation (α).

20. Véhicule complet (1) à plusieurs éléments, lequel présente un véhicule tracteur (2), un véhicule tracté (3) et un système de capture d'entourage (40) selon la revendication 18 ou 19.
